# EUROPÄISCHE PATENTSCHRIFT

(11) **EP 3 219 536 B1**
(45) Veröffentlichungstag und Bekanntmachung des Hinweises auf die Patenterteilung: **18.01.2023**
(21) Anmeldenummer: 17159070.6
(22) Anmeldetag: 03.03.2017
(51) Int. Cl.: B60L 50/64

(54) **MODULARES SYSTEM FÜR SCHNELLLADEFÄHIGE TRAKTIONSBATTERIE FÜR FLURFÖRDERZEUG**
MODULAR SYSTEM FOR FAST CHARGING TRACTION BATTERY FOR INDUSTRIAL TRUCK
SYSTÈME MODULAIRE POUR BATTERIE DE TRACTION À RECHARGE RAPIDE POUR CHARIOT DE MANUTENTION

(30) Priorität: 15.03.2016 DE 102016104759
(43) Veröffentlichungstag der Anmeldung: 20.09.2017
(73) Patentinhaber: Linde Material Handling GmbH, 63743 Aschaffenburg (DE)
(72) Erfinder: Kronenberger-Edel, Georg, 63834 Sulzbach (DE); Hergenröther, Christian, 63839 Kleinwallstadt (DE)
(74) Vertreter: Patentship Patentanwaltgesellschaft

(56) Entgegenhaltungen:
- WO-A2-2006/045016
- WO-A2-2007/057753

## Beschreibung

Die Erfindung betrifft ein modulares System einer schnellladefähigen Traktionsbatterie für ein Flurförderzeug, wobei das modulare System ein Batteriegehäuse und eine Batterie mit hoher Spannung im Bereich von 400 V als Energiespeicher und einen optional in das Gehäuse einsetzbaren Spannungsumsetzer aufweist, um eine Betriebsspannung des Flurförderzeugs an einem Entladeanschluss zur Verfügung zu stellen.

Bei Flurförderzeugen, wie beispielsweise Gegengewichtsgabelstaplern, Schubmaststaplern und Lagertechnikgeräten, kommen im Fall eines batterieelektrischen Antriebs auswechselbare Traktionsbatterien zum Einsatz. Diese Traktionsbatterien sind in herkömmlicher Ausführung als Blei-Säurebatterie ausgeführt und in bestimmten normierten Abmessungen sowie mit normierten Spannungen erhältlich, beispielsweise in einem Betriebsspannungsbereich von 24 V bis 80 V. für die Abmessungen und Spannungen bestehen dabei Industrienormen und können daneben auch herstellerspezifische Festlegungen gelten. Neben dem Wiederaufladen der Traktionsbatterie in dem Flurförderzeug ist es üblich, vor allem bei einem Einsatz der Flurförderzeuge in einem System mit mehreren Arbeitsschichten, die Traktionsbatterie gegen eine voll aufgeladene Traktionsbatterie auszutauschen, sobald diese entladen ist, da die Traktionsbatterien im Regelfall maximal so ausgelegt werden, um einen andauernden Betrieb während einer 8 oder 12-stündigen Arbeitsschicht zu ermöglichen. Die entladene Traktionsbatterie wird während des Betriebs mit der zweiten Traktionsbatterie dann an einer Ladestation bzw. durch ein separates Ladegerät wieder aufgeladen. Hierfür stehen Ladegeräte für die entsprechenden Betriebsspannungsbereiche zur Verfügung.

In zunehmendem Maß kommen bei Flurförderzeugen Traktionsbatterien zum Einsatz, die man als Hochleistungsbatterien bezeichnen kann und die sich dadurch auszeichnen, dass sie gegenüber einem Blei-Säureakkumulator eine höhere Energiedichte in Bezug auf Gewicht und/oder Volumen aufweisen sowie eine andere Technik als eine Blei-Säure-Reaktion für die Energiespeicherung nutzen. Hinzu kommt bei vielen Hochleistungsbatterien als Merkmal, dass eine hohe Leistung beim Entladen abgegeben werden kann und/oder mit großer Leistung geladen werden kann. Die typischen Energiedichten in Bezug auf Gewicht und/oder Volumen liegen bei einer Hochleistungsbatterie dabei mindestens für einen der beiden Werte oberhalb und außerhalb der entsprechenden Kenngrößen für Blei-Säurebatterien.

Bereits Nickel-Cadmium Batterien weisen zwar keinen erheblichen Gewichtsvorteil auf, haben jedoch eine bis zum dreifachen höhere Energiedichte in Bezug auf das Volumen. Weitere bekannte Technologien für Akkumulatoren bzw. wieder aufladbare Batterien unter Einsatz von Nickel sind beispielsweise Nickel-Metallhydrid, Nickel-Eisen, Nickel-Wasserstoff, Nickel-Zink und Silber-Zink. Daneben sind auch Natrium-Nickelchlorid und Natrium-Schwefel Akkumulatoren bekannt.

Zunehmend in größerem Umfang eingesetzt werden jedoch Lithium-Ionenbatterien, die eine in der Serie anwendbare Zuverlässigkeit erreicht haben, sich durch hohe Energiedichte auszeichnen und nur einem geringen Memoryeffekt unterliegen sowie ein Entladen der Batterie bzw. Aufladen der Batterie mit großer Leistung ermöglichen. Bei Lithium-Ionenbatterien sind ebenfalls unterschiedliche Technologien bekannt, wie beispielsweise Lithium-Polymer, Lithium-Cobaltdioxid, Lithium-Luft, Lithium-Titanat, Lithium-Eisenphosphat, Lithium-Mangan und Zinn-Schwefel-Lithiumionen.

Insbesondere bei solchen Hochleistungsbatterien, aber auch bei Blei-Säurebatterie entsteht das Problem, dass sich lange Ladezeiten der Batterien durch die Höhe des Ladestroms ergeben, der begrenzt ist und der maßgeblich die Erwärmung beim Laden sowie die Dimensionierung und Auslegung der Anschlussleitungen bestimmt. Nachteilig ist insbesondere, dass die zuvor genannten relativ niedrigen Spannungen bei der Verwendung von Traktionsbatterie mit einer großen Kapazität keine Schnellladung ermöglichen. Eine solche Schnellladung ist jedoch besonders vorteilhaft, da durch diese kurze Arbeitspausen genutzt werden können und beispielsweise eine Wiederaufladung innerhalb einer Stunde oder einer halben Stunde erfolgen kann, sodass eventuell sogar keine zweite Batterie für einen Wechsel im Mehrschichtbetrieb vorgehalten werden muss.

Es ist denkbar, deswegen die Traktionsbatterie und das gesamte batterie-elektrisch betriebene Flurförderzeug mit einer höheren Spannung zu betreiben. Zumeist sind jedoch derzeitige Antriebskonzepte und auch die sonstige elektrische Anlage hierauf nicht ausgelegt und dies erfordert nicht unerhebliche Anpassungen, schon aus Sicherheitsgründen und für eine bessere Isolierung, wenn beispielsweise eine Spannung von 400 V eingesetzt wird.

Die WO 2007 / 057753 A2 offenbart eine Struktur zum Einsatz einer Batterie.

Es ist denkbar, hier eventuell einen Spannungsumsetzer in die Batterie zu integrieren. Ein solches Konzept eines bidirektionalen Spannungsumsetzers, der sowohl beim Entladen eine Batteriespannung anpasst, als auch beim Laden eingesetzt werden kann, ist aus der WO 2006/045016 A2 bekannt, die eine Batterie mit Lithium-Zellen, ein Batteriemanagementsystem und einem Spannungsumsetzer offenbart, durch die das Verhalten und insbesondere die Spannungskennlinie bei der Entladung auf diejenige einer entsprechenden Blei-Säurebatterie umgesetzt wird. In einer Ausführungsform wird beschrieben, dass der Spannungsumsetzer ein bidirektionaler Spannungsumsetzer sein kann.

Nachteilig an diesem Stand der Technik ist zum einen, dass durch diesen noch keine Möglichkeit einer Schnellladung offenbart wird. Insbesondere auch nachteilig an diesem bekannten Stand der Technik, dass für eine Mehrzahl von Flurförderzeugen mit unterschiedlichen Spannungsanforderungen, insbesondere den oben genannten Spannungsbereichen von 24 V, 48 V und 80V, eine Vielzahl von eigenen Traktionsbatterie entwickelt werden muss.

Der vorliegenden Erfindung liegt die Aufgabe zugrunde, ein modulares System einer schnellladefähigen Traktionsbatterie für ein Flurförderzeug zur Verfügung zu stellen, das die zuvor genannten Nachteile vermeidet und mit dem es möglich ist, für eine Mehrzahl von Flurförderzeugen insbesondere mit unterschiedlichen Betriebsspannungen eine schnell ladefähige Traktionsbatterie im Austausch zu einer herkömmlichen zur Verfügung zu stellen.

Die erste Aufgabe wird durch ein modulares System einer schnellladefähigen Traktionsbatterie mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem modularen System einer schnellladefähigen Traktionsbatterie für ein Flurförderzeug, wobei das modulare System ein Batteriegehäuse und eine Batterie mit hoher Spannung im Bereich von 400 V als Energiespeicher und einen optional in das Gehäuse einsetzbaren Spannungsumsetzer aufweist, um eine Betriebsspannung des Flurförderzeugs an einem Entladeanschluss zur Verfügung zu stellen, die Batterie über einen Ladeanschluss direkt mit hoher Spannung im Bereich von 400 V geladen werden kann und die Traktionsbatterie mindestens in einer Mehrzahl von Varianten für verschiedene Betriebsspannungen ausgebildet ist, wobei neben einer direkten Weiterleitung der Spannung der Batterie an den Entladeanschluss der Batterie mindestens ein Spannungsumsetzer zum Einsatz kommt oder alternativ eine Mehrzahl von Spannungsumsetzern für verschiedene Betriebsspannungen wobei von vorne herein in jedem Fall ein Spannungsumsetzer eingesetzt ist und durch verschiedene Spannungsumsetzer eine Anpassung vorgenommen ist.

In einem Batteriegehäuse können somit verschiedene Traktionsbatterien ausgebildet werden, indem unterschiedliche Komponenten eingesetzt werden. Beispielsweise ist es möglich, eine Traktionsbatterie mit einer hohen Spannung, etwa 400 V, vorzusehen und in demselben Gehäuse in einer anderen Ausführung zusätzlich einen Spannungsumsetzer bzw. Spannungsumsetzer vorzusehen, der die Spannung der Batterie auf einen bei herkömmlichen Flurförderzeugen benötigten Wert herabsetzt. Typische Beispiele solcher Werte sind 24 V, 48 V oder 80 V. Daneben ist es auch denkbar, ein modulares System auszubilden, bei dem von vorne herein in jedem Fall ein Spannungsumsetzer eingesetzt wird und durch verschiedene Spannungsumsetzer, worunter auch baulich identische, jedoch für verschiedene Spannungen ausgelegte Spannungsumsetzer verstanden werden können, eine Anpassung vorzunehmen. Ohne größeren Entwicklungsaufwand und die damit verbundenen Kosten können somit innerhalb des modularen Systems Traktionsbatterien für die unterschiedlichsten Flurförderzeug ausgebildet werden. Es ist auch zusätzlich möglich, Batteriegehäuse in den äußeren Maßen der verschiedenen normierten Größen der Batterietröge bei herkömmlichen Blei-Säurebatterie vorzusehen und in diese die Komponenten einzusetzen, wobei weitgehend identische Komponenten verwendet werden können. Der Ausgleich des zur Verfügung stehenden Bauraums kann dann beispielsweise durch die Batterie mit hoher Spannung erfolgen, die wiederum aus Zellen aufgebaut ist und deswegen leicht in ihrer räumlichen Dimensionierung verändert werden kann.

Die Mehrzahl von Spannungsumsetzern ist für Spannungsbereiche von 24 V und/oder 48 V und/oder 80 V ausgebildet.

In einer günstigen Weiterbildung des Systems ist eine Mehrzahl von Batterien mit unterschiedlichen Kapazitäten eingesetzt.

Vorteilhaft sind die Batterie oder die Batterien Hochleistungsbatterien, insbesondere Lithium-Ionenbatterien.

Hochleistungsbatterien, wie sie oben definiert und beschrieben wurden, und insbesondere Lithium-Ionen Batterien sind besonders gut geeignet für eine Schnellladung.

Die Traktionsbatterie kann eine Batteriemanagement-Steuerung umfassen.

In einer vorteilhaften Weiterbildung kann die Batteriemanagement-Steuerung über eine Kommunikationsverbindung mit dem Flurförderzeug verbunden werden.

Die Batteriemanagement-Steuerung kann über eine Ladegerätkommunikationsverbindung mit einem Ladegerät verbunden werden.

Eine solche Kommunikationsverbindung zur Peripherie bzw. dem Flurförderzeug und/oder dem Ladegerät ist optional, wobei eine Datenverbindungs-Schnittstelle aus einer oder mehreren Steuerleitungen besteht. Die Kommunikation kann dabei über ein Datenbussystem erfolgen und auch über diverse Steuer- oder Codierleitungen. Je nach Bedarf für solche Kommunikationsverbindungen kann in dem modularen System eine solche hinzugefügt werden.

Die Traktionsbatterie kann optional einen Steuerungsspannungsumsetzer für eine Steuerspannung bzw. Spannungsversorgung von Steuervorrichtungen des Flurförderzeugs aufweisen.

Soweit erforderlich ermöglicht es dies, in dem modularen System auf einfache Art und Weise eine Traktionsbatterie auszubilden, bei der eine zweite, niedrigere Spannung für Steuerungssysteme des Flurförderzeugs zur Verfügung gestellt wird, beispielsweise 13 V.

In einer günstigen Weiterbildung weist die Traktionsbatterie optional ein Analogmodul auf, über das analoge Signalwerte wie, wie insbesondere Spannungswerte und Temperaturwerte, zur Verfügung gestellt werden und/oder analogen Signalen entsprechende Informationen aus Steuerbussystemen.

Über eine oder mehrere Leitungen können diverse Analogsignale peripheren Systemen, insbesondere dem Flurförderzeug und/oder dem Ladegerät nutzbar gemacht werden.

Vorteilhaft kann die von dem Spannungsumsetzer zur Verfügung gestellte Betriebsspannung eingestellt werden und dadurch eine Mehrzahl von Spannungswandler gebildet werden.

Durch die Einstellbarkeit der Betriebsspannung kann eine leichte Anpassung an unterschiedliche erforderliche Betriebsspannungen verschiedener Flurförderzeuge erfolgen. Innerhalb bestimmter Grenzen ist es möglich, Spannungsumsetzer für unterschiedliche Spannungen allein durch Einstellenwerte auszubilden, ohne diese baulich in nennenswertem Umfang oder überhaupt zu verändern. Der Aufbau eines modularen Systems um jeweils passende Traktionsbatterien für verschiedene Flurförderzeug auszubilden, wird dadurch nochmals einfacher. Die Mehrzahl von Spannungswandler wird in dem Fall allein durch beispielsweise eine Softwareeinstellung erreicht.

Erfindungsgemäß kann die Batterie über einen Ladeanschluss direkt mit hoher Spannung geladen werden.

Dadurch kann vermieden werden, dass der Spannungsumsetzer bidirektionale aufgebaut sein muss und sehr hohe Ströme zunächst über die Anschlussleitung zu dem Spannungsumsetzer beim Laden geleitet werden müssten.

Weitere Vorteile und Einzelheiten der Erfindung werden anhand der in den schematischen Figuren dargestellten Ausführungsbeispiele näher erläutert. Hierbei zeigt
- Fig. 1: schematisch ein Ausführungsbeispiel einer erfindungsgemäßen, nach dem modularen System aufgebauten Traktionsbatterie,
- Fig. 2: ein zweites Ausführungsbeispiel einer erfindungsgemäßen, nach dem modularen System aufgebauten Traktionsbatterie und
- Fig. 3: ein drittes Ausführungsbeispiel einer erfindungsgemäßen, nach dem modularen System aufgebauten Traktionsbatterie.

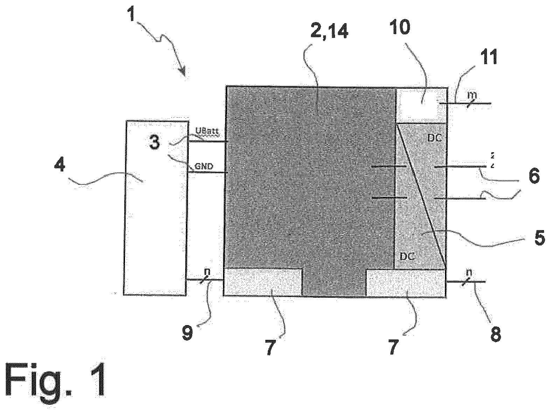

Die Fig. 1 zeigt schematisch ein Ausführungsbeispiel einer erfindungsgemäßen, nach dem modularen System aufgebauten Traktionsbatterie 1. Eine Batterie 2 mit hoher Spannung dient als Energiespeicher 14. Über einen Ladeanschluss 3 und ein Ladegerät 4 mit einer hohen Spannung, im vorliegenden Beispiel von 400 V, kann die Traktionsbatterie 1 sehr schnell geladen werden. Im Entladebetrieb wird die Spannung der Batterie 2 auf eine Betriebsspannung des Flurförderzeugs durch einen Spannungsumsetzer 5 umgesetzt, der die Betriebsspannung an einem Entladeanschluss 6 dem Flurförderzeug zur Verfügung stellt.

Eine Batteriemanagement-Steuerung 7, die optional vorgesehen sein kann, ist über eine erste Kommunikationsverbindung 8 mit n parallelen Datenleitungen mit dem Flurförderzeug verbunden. Über eine zweite Kommunikationsverbindung 9 mit ebenfalls n parallelen Datenleitungen ist sie mit dem Ladegerät 4 verbunden. Dadurch können der Ladevorgang wie auch der Entladevorgang der Traktionsbatterie 1 gesteuert und geregelt werden.

Weiterhin ist in dem vorliegenden Ausführungsbeispiel der Traktionsbatterie 1 ein optional mögliches Analogmodul 10 integriert, das analoge Signalwerte über m Leitungen 11 der Peripherie zur Verfügung stellt, hier insbesondere dem Flurförderzeug. Dabei kann es sich beispielsweise um Spannungswerte oder Temperaturwerte handeln.

Durch den Einsatz eines Spannungsumsetzers 5 mit einer anderen Ausgangsspannung können beispielsweise ohne größeren Umbauaufwand sowohl eine Traktionsbatterie 1 für 24 V, als auch eine solche für 48 V ausgebildet werden.

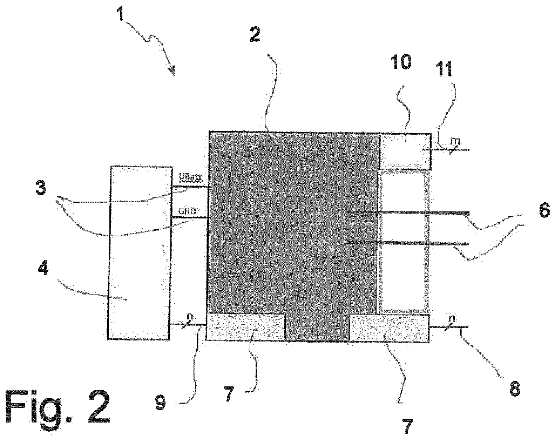

Die Fig. 2 zeigt ein zweites Ausführungsbeispiel einer erfindungsgemäßen, nach dem modularen System aufgebauten Traktionsbatterie1. Diese weist ebenfalls die Batterie 2 mit hoher Spannung auf, die über die Ladeanschlüsse 3 mit dem Ladegerät 4 verbunden ist und die Batteriemanagement-Steuerung 7, die über die Kommunikationsverbindungen 8,9 mit dem Flurförderzeug und dem Ladegerät 4 verbunden ist. Ebenso ist auch bei diesem Ausführungsbeispiel der Traktionsbatterie 1 das Analogmodul 10 mit den Leitungen 11 vorgesehen.

Im Gegensatz zu dem ersten Ausführungsbeispiel ist kein Spannungsumsetzer vorgesehen und die Entladeanschlüssen 6 sind direkt mit der Batterie 2 verbunden. Die Traktionsbatterie 1 ist für ein Flurförderzeug vorgesehen, das mit einer hohen Spannung als Betriebsspannung direkt arbeiten kann.

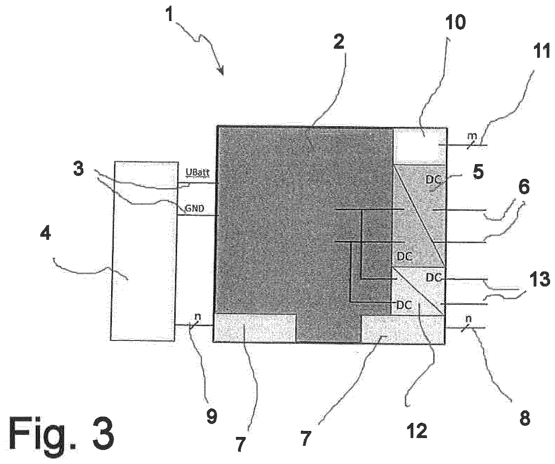

Die Fig. 3 zeigt ein drittes Ausführungsbeispiel einer erfindungsgemäßen, nach dem modularen System aufgebauten Traktionsbatterie1. Diese weist ebenfalls die Batterie 2 mit hoher Spannung auf, die über die Ladeanschlüsse 3 mit dem Ladegerät 4 verbunden ist sowie den Spannungsumsetzer 5 mit den Entladeanschlüssen 6 und die Batterie-Management-Steuerung 7, die über die Kommunikationsverbindungen 8,9 mit dem Flurförderzeug und dem Ladegerät 4 verbunden ist. Ebenso ist auch bei diesem Ausführungsbeispiel der Traktionsbatterie 1 das Analogmodul 10 mit den Leitungen 11 vorgesehen.

Zusätzlich weist die Traktionsbatterie 1 einen weiteren Spannungsumsetzer 12 auf, der eine Steuerspannung, im vorliegenden Beispiel von 13 V, über eine Steuerspannungsleitung 13 dem Flurförderzeug zur Verfügung stellt.

Die in den Fig. 1,2 und 3 beschriebenen Traktionsbatterien 1 können durch das modulare System durch den Austausch weniger Komponenten bzw. deren Hinzufügen gebildet werden.

## Patentansprüche

1. Modulares System einer schnellladefähigen Traktionsbatterie (1) für ein Flurförderzeug, wobei das modulare System ein Batteriegehäuse und eine Batterie (2) mit hoher Spannung im Bereich von 400 V als Energiespeicher (14) und einen in das Gehäuse einsetzbaren Spannungsumsetzer (5) aufweist, um eine Betriebsspannung des Flurförderzeugs an einem Entladeanschluss (6) zur Verfügung zu stellen,
wobei
die Batterie (2) über einen Ladeanschluss (3) direkt mit hoher Spannung im Bereich von 400 V geladen werden kann und **dadurch gekennzeichnet, dass** die Traktionsbatterie (1) mindestens in einer Mehrzahl von Varianten für verschiedene Betriebsspannungen ausgebildet ist, wobei neben einer direkten Weiterleitung der Spannung der Batterie (2) an den Entladeanschluss (6) der Batterie (2) mindestens ein Spannungsumsetzer (5) zum Einsatz kommt oder alternativ eine Mehrzahl von Spannungsumsetzern (5) für verschiedene Betriebsspannungen, wobei von vorne herein in jedem Fall ein Spannungsumsetzer (5) eingesetzt ist und durch verschiedene Spannungsumsetzer (5) eine Anpassung vorgenommen ist.

2. Modulares System nach Anspruch 1,
**dadurch gekennzeichnet,**
**dass** die Mehrzahl von Spannungsumsetzern (5) für Spannungsbereiche von 24 V und/oder 48 V und/oder 80 V ausgebildet ist.

3. Modulares System nach Anspruch 1 oder 2,
**dadurch gekennzeichnet,**
**dass** eine Mehrzahl von Batterien (2) mit unterschiedlichen Kapazitäten einsetzbar ist.

4. Modulares System nach einem der Ansprüche 1 bis 3,
**dadurch gekennzeichnet,**
**dass** die Batterie (2) oder die Batterien (2) Hochleistungsbatterien sind, insbesondere Lithium-Ionenbatterien.

5. Modulares System nach einem der Ansprüche 1 bis 4,
**dadurch gekennzeichnet,**
**dass** die Traktionsbatterie (1) optional eine Batteriemanagement-Steuerung (7) umfasst.

6. Modulares System nach Anspruch 5,
**dadurch gekennzeichnet,**
**dass** die Batteriemanagement-Steuerung (7) über eine Kommunikationsverbindung (8) mit dem Flurförderzeug verbunden werden kann.

7. Modulares System nach Anspruch 5 oder 6,
**dadurch gekennzeichnet,**
**dass** die Batteriemanagement-Steuerung (7) über eine Ladegerätkommunikationsverbindung (9) mit einem Ladegerät (4) verbunden werden kann.

8. Modulares System nach einem der Ansprüche 1 bis 7,
**dadurch gekennzeichnet,**
**dass** die Traktionsbatterie (1) optional einen Steuerungsspannungsumsetzer (12) für eine Steuerspannung bzw. Spannungsversorgung von Steuervorrichtungen des Flurförderzeugs aufweist.

9. Modulares System nach einem der Ansprüche 1 bis 8,
**dadurch gekennzeichnet,**
**dass** die Traktionsbatterie (1) optional ein Analogmodul (10) aufweist, über das analoge Signalwerte wie, wie insbesondere Spannungswerte und Temperaturwerte, zur Verfügung gestellt werden und/oder analogen Signalen entsprechende Informationen aus Steuerbussystemen.

10. Modulares System nach einem der Ansprüche 1 bis 9,
**dadurch gekennzeichnet,**
**dass** die von dem Spannungsumsetzer (5) zur Verfügung gestellte Betriebsspannung eingestellt werden kann und dadurch eine Mehrzahl von Spannungswandler gebildet wird.

## Claims

1. Modular system for a fast-charging traction battery (1) for an industrial truck, wherein the modular system has a battery housing and a battery (2) having a high voltage in the region of 400 V as energy store (14) and a voltage converter (5) which is able to be inserted into the housing, in order to provide an operating voltage of the industrial truck at a discharging connection (6), wherein the battery (2) can be charged directly with a high voltage in the region of 400 V via a charging connection (3) and **characterized in that** the traction battery (1) is configured at least in a plurality of variants for different operating voltages, wherein, in addition to routing the voltage of the battery (2) to the discharging connection (6) of the battery (2) directly, at least one voltage converter (5) is used or alternatively a plurality of voltage converters (5) for different operating voltages, wherein one voltage converter (5) is used in each case and adjustment is performed by different voltage converters (5).

2. Modular system according to Claim 1,
**characterized**
**in that** the plurality of voltage converters (5) are configured for voltages in the region of 24 V and/or 48 V and/or 80 V.

3. Modular system according to Claim 1 or 2, **characterized**
**in that** a plurality of batteries (2) having different capacities are able to be used.

4. Modular system according to one of Claims 1 to 3, **characterized**
**in that** the battery (2) or the batteries (2) are high-power batteries, in particular lithium-ion batteries.

5. Modular system according to one of Claims 1 to 4, **characterized**
**in that** the traction battery (1) optionally comprises a battery management controller (7).

6. Modular system according to Claim 5,
**characterized**
**in that** the battery management controller (7) can be connected to the industrial truck via a communication link (8).

7. Modular system according to Claim 5 or 6, **characterized**
**in that** the battery management controller (7) can be connected to a charger (4) via a charger communication link (9).

8. Modular system according to one of Claims 1 to 7, **characterized**
**in that** the traction battery (1) optionally has a control voltage converter (12) for a control voltage or voltage supply from control devices of the industrial truck.

9. Modular system according to one of Claims 1 to 8, **characterized**
**in that** the traction battery (1) optionally has an analogue module (10) which provides analogue signal values, such as in particular voltage values and temperature values, and/or information from control bus systems that corresponds to analogue signals.

10. Modular system according to one of Claims 1 to 9, **characterized**
**in that** the operating voltage provided by the voltage converter (5) can be adjusted and thus a plurality of voltage converters are formed.

## Revendications

1. Système modulaire d'une batterie de traction à recharge rapide (1) pour un chariot de manutention, le système modulaire présentant un boîtier de batterie et une batterie (2) ayant une haute tension dans la gamme de 400 V en tant qu'accumulateur d'énergie (14) et un convertisseur de tension (5) pouvant être inséré dans le boîtier afin de fournir une tension de fonctionnement du chariot de manutention au niveau d'une borne de décharge (6), dans lequel la batterie (2) peut être chargée directement avec une haute tension dans la gamme de 400 V par l'intermédiaire d'une borne de charge (3), et **caractérisé en ce que** la batterie de traction (1) est réalisée dans au moins une pluralité de variantes pour différentes tensions de fonctionnement, dans lequel, en plus d'une retransmission directe de la tension de la batterie (2) à la borne de décharge (6) de la batterie (2), au moins un convertisseur de tension (5) est mis en œuvre ou en variante une pluralité de convertisseurs de tension (5) pour différentes tensions de fonctionnement est mise en œuvre, dans lequel dans tous les cas un convertisseur de tension (5) est mis en œuvre d'emblée, et une adaptation est effectuée par différents convertisseurs de tension (5).

2. Système modulaire selon la revendication 1, **caractérisé en ce que** la pluralité de convertisseurs de tension (5) est réalisée pour des gammes de tension de 24 V et/ou de 48 V et/ou de 80 V.

3. Système modulaire selon la revendication 1 ou 2, **caractérisé en ce qu'**une pluralité de batteries (2) de différentes capacités peut être mise en œuvre.

4. Système modulaire selon l'une quelconque des revendications 1 à 3, **caractérisé en ce que** la batterie (2) ou les batteries (2) sont des batteries haute performance, en particulier des batteries lithium-ion.

5. Système modulaire selon l'une quelconque des revendications 1 à 4, **caractérisé en ce que** la batterie de traction (1) comprend en option une commande de gestion de batterie (7).

6. Système modulaire selon la revendication 5, **caractérisé en ce que** la commande de gestion de batterie (7) peut être reliée au chariot de manutention par l'intermédiaire d'une liaison de communication (8).

7. Système modulaire selon la revendication 5 ou 6, **caractérisé en ce que** la commande de gestion de batterie (7) peut être reliée à un chargeur (4) par l'intermédiaire d'une liaison de communication de chargeur (9).

8. Système modulaire selon l'une quelconque des revendications 1 à 7, **caractérisé en ce que** la batterie de traction (1) présente en option un convertisseur de tension de commande (12) pour une tension de commande ou une alimentation en tension des dispositifs de commande du chariot de manutention.

9. Système modulaire selon l'une quelconque des revendications 1 à 8, **caractérisé en ce que** la batterie de traction (1) présente en option un module analogique (10) par lequel des valeurs de signal analogiques, comme en particulier des valeurs de tension et des valeurs de température, et/ou des informations provenant de systèmes de bus de commande et correspondant à des signaux analogiques sont fournies.

10. Système modulaire selon l'une quelconque des revendications 1 à 9, **caractérisé en ce que** la tension de fonctionnement fournie par le convertisseur de tension (5) peut être réglée et forme ainsi une pluralité de convertisseurs de tension.
